# EUROPEAN PATENT SPECIFICATION

(11) **EP 0 712 680 B1**
(45) Date of publication and mention of the grant of the patent: **08.10.1997**
(21) Application number: 95115844.3
(22) Date of filing: 08.10.1995
(51) Int. Cl.: B23K 9/28, B23K 9/29

(54) **Water-cooled MIG welding torch**
Wassergekühlter MIG-Schweissbrenner
Torche de soudage MIG refroidie par eau

(30) Priority: 15.11.1994 IT PD940121
(43) Date of publication of application: 22.05.1996
(73) Proprietor: TRAFIMET S.p.A., 36020 Castegnero (VI) (IT)
(72) Inventor: Giuseppe, Zigliotto, I-36023 Longare (VI) (IT)
(74) Representative: Verlato, Celestino

(56) References cited:
- EP-A- 0 074 106
- EP-A- 0 590 728
- US-A- 4 508 951
- US-A- 4 864 099
- PATENT ABSTRACTS OF JAPAN vol. 8 no. 83 (M-290) ,17 April 1984 & JP-A-59 001067 (HITACHI SEISAKUSHO KK) 6 January 1984,

## Description

The present invention relates to a seam welding torch, in particular a MIG/MAG torch.

This particular configuration provides the same effective cooling as with open circuit torches, besides the compactness peculiarities of closed cooling circuit torches.

As known, in welding torches, specifically in MIG-MAG welding torches, cooling means must be provided to eliminate the heat produced during the welding process, in particular in the front of the torch, which is mostly subjected to electric arc radiation.

With respect to refrigerant cooling systems, the torches known in the art comprise two broad categories: open cooling circuit torches and closed cooling circuit torches, both having an inlet pipe and an outlet pipe for the coolant.

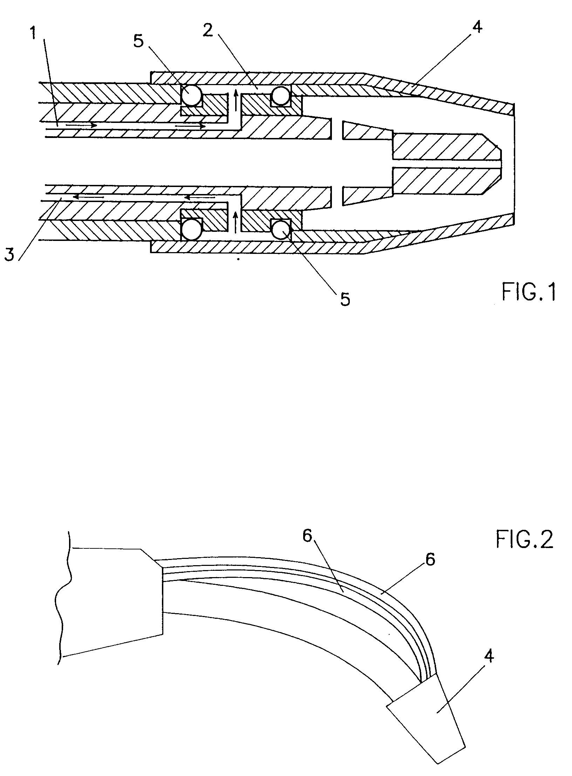

A sectional view of an open circuit torch is shown in Figure 1.

In these torches known in the art the liquid comes from an inlet passage 1 in the torch body, it passes into an annular chamber 2 which is obtained by reducing the torch diameter near the nozzle and it proceeds through a passage 3.

Chamber 2 is outwardly defined by nozzle 4 and some O-ring seals are provided, being shown by reference number 5.

However, this kind of torch has the drawback that it needs continual maintenance operations in order to guarantee the perfect efficiency of the seals and, moreover, when removing the nozzle, for example to replace it, coolant leakages may occur. Furthermore, said torches are less resistant to shocks.

An example of an open circuit torch is known from US-A-4 864 099.

A closed circuit torch known in the art is schematically shown in Figure 2.

These torches are provided with a pair of additional pipes, respectively an inlet pipe and an outlet pipe, which lead the coolant near the nozzle.

These torches, however, besides being aesthetically little pleasing, have the considerable drawback of having larger overall dimensions due to the presence of the coolant pipes, which often makes them disagreeable to users, especially in case they are obliged to perform welding operations in narrow places (see Fig. 2).

Therefore, the need is felt to have torches combining the advantageous characteristics of both above illustrated categories, thus permitting to obtain, in a closed circuit, compact and practical-to-use torch, the same nozzle cooling efficiency as with open circuit torches.

This problem is solved by this invention as defined in claim 1, which provides a closed circuit torch, having a shell formed by a pipe which is concentric with the torch body, wherein a pair of crushed portions extend throughout the length of the torch body to define, between the shell and the torch body, a pair of cooling passages, i.e. respectively an inlet passage and an outlet passage for the coolant.

The nozzle is fitted on the end portion of the shell, which is made of a good heat conductor, thus providing very good cooling in a torch having dimensions which can be compared with the dimensions of open circuit torches.

This and other advantages will be more clear from the following detailed description, provided by way of non restrictive example, with reference to the accompanying drawings, in which:
- Figure 3 is a sectional view of a torch according to the invention, taken along a plane passing through the axis of the torch;
- Figure 4 is a sectional view of a torch taken along a plane which is at right angles to the torch axis.

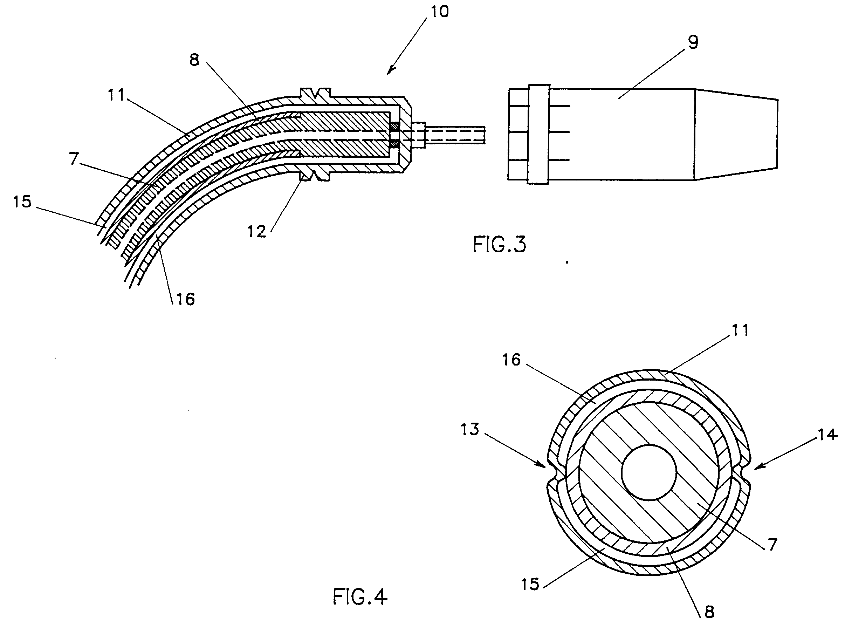

With reference to Figures 3 and 4, number 7 shows the torch body, which may have, for example, a substantially cylindric section and is outwardly provided with a covering 8 of an insulating material, which extends as far as the tip, where the connection is provided for nozzle 9, said connection being shown as a whole by number 10.

A shell 11, being substantially coaxial with the torch body, and made of a good heat conducting metal, for example brass and copper, is fitted on the torch body and in its front it has a collar 12 which forms a support for nozzle 9 when the nozzle is fitted on the torch.

According to the invention, on shell 11, due to its deformation, there is provided a pair of recesses or crushed portions, indicated in Figure 4 by numbers 13 and 14, which are in contact with the underlying torch.

Among the body 7 of the torch, shell 11 and the walls of crushed portions 13 and 14 a pair of channels 15 and 16 is then defined, said channels being used respectively as an inlet passage and an outlet passage for the coolant.

These narrow portions extend to collar 12, whereas in the end portion of the torch the space between the shell and the torch body forms a sort of "cooling chamber" wherein the liquid coming from channel 15 and going out through channel 16 absorbs heat through the shell wall, thus providing effective cooling.

The described configuration combines and increases the advantages of both kinds of torches known in the art, since more effective cooling is performed than with open circuit torches, because even the inside is cooled, the whole of this in a compact closed circuit torch.

Dimensions, as well as the materials employed may change according to the requirements of use.

## Claims

1. A liquid cooled MIG or MAG welding torch, comprising all around the torch body (7) a high thermal conductor shell (11), wherein a pair of crushed portions (13, 14) extend longitudinally throughout the length of the torch to the tip, said crushed portions (13, 14) making the shell (11) touch the torch body (7) to define, between the torch body (7) and the shell (11), an inlet passage (15) and an outlet passage (16) for the coolant.

2. A welding torch according to claims 1 and 2, characterized in that said crushed portions (13, 14) finish at the torch tip, so that in this area a chamber is defined joining said inlet passage and said outlet passage for the coolant, the shell wall forming, near said chamber, the nozzle support.

3. A welding torch according to claim 1, characterized in that at the end portion of the torch said shell (11) is shaped so as to form the nozzle support.

4. A torch according to any one of the preceding claims, characterized in that on the outside of said shell (11) it comprises a collar (12) forming a support for the nozzle (9) when said nozzle is fitted on the torch.

## Patentansprüche

1. Flüssigkeitsgekühlter MIG oder MAG-Schweißbrenner, der um den gesamten Brennerkörper (7) herum eine Hülle (11) aus einem hohen thermischen Leiter aufweist, wobei sich ein Paar zusammengedrückter Teile (13, 14) längs durch die Länge des Brenners zu der Spitze erstreckt, wobei die zusammengedrückten Teile (13, 14) dazu führen, daß die Hülle (11) den Brennerkörper (7) berührt, um zwischen dem Brennerkörper (7) und der Hülle (11) einen Einlaßdurchlaß (15) und einen Auslaßdurchlaß (16) für das Kühlmittel zu definieren.

2. Schweißbrenner nach Anspruch 1, dadurch gekennzeichnet, daß die zusammengedrückten Teile (13, 14) an der Brennerspitze enden, so daß in diesem Bereich eine Kammer definiert wird, die den Einlaßdurchlaß und den Auslaßdurchlaß für das Kühlmittel verbindet, wobei die Hüllenwand in der Nähe der Kammer den Düsenträger bildet.

3. Schweißbrenner nach Anspruch 1, dadurch gekennzeichnet, daß am Endteil des Brenners die Hülle (11) so geformt ist, daß sie den Düsenträger bildet.

4. Brenner nach einem der vorhergehenden Ansprüche, dadurch gekennzeichnet, daß er an der Außenseite der Hülle (11) einen Kragen (12) aufweist, der einen Träger für die Düse (9) bildet, wenn die Düse an dem Brenner befestigt wird.

## Revendications

1. Torche de soudage MIG ou MAG refroidie par un liquide, comprenant tout autour du corps de torche (7) une coque (11) hautement conductrice de la chaleur, dans laquelle une paire de parties écrasées (13, 14) s'étendent longitudinalement sur la longueur de la torche jusqu'au bout, les parties écrasées (13, 14) faisant entrer la coque (11) en contact avec le corps de torche (7) pour délimiter, entre le corps de torche (7) et la coque (11), un passage d'entrée (15) et un passage de sortie (16) pour l'agent réfrigérant.

2. Torche de soudage suivant l'une des revendications 1 et 2, caractérisé en ce que les parties écrasées (13, 14) se terminent au bout de la torche de façon que, dans cette zone, une chambre soit délimitée qui relie le passage d'entrée et le passage de sortie pour l'agent réfrigérant, la paroi de coque formant, à proximité de cette chambre, le support de buse.

3. Torche de soudage suivant la revendication 1, caractérisée en ce que, à la partie d'extrémité de la torche, la coque (11) est façonnée de manière à former le support de buse.

4. Torche suivant l'une quelconque des revendications précédentes, caractérisée en ce que, à l'extérieur de la coque (11), elle comprend une bride (12) formant un support pour la buse (9) lorsque la buse est montée sur la torche.
